# EUROPÄISCHE PATENTANMELDUNG

(11) **EP 1 241 862 A1**
(43) Veröffentlichungstag der Anmeldung: **18.09.2002**
(21) Anmeldenummer: 01106138.9
(22) Anmeldetag: 13.03.2001
(51) Int. Cl.: H04M 3/42, H04Q 3/00

(54) **Dienstespezifische Behandlung eines Verbindungswunsches hinsichtlich des gerufenen Teilnehmeranschlusses**

(71) Anmelder: SIEMENS AKTIENGESELLSCHAFT, 80333 München (DE)
(72) Erfinder: Dieckhoener, Fritz-Heinri, 80993 München (DE); Lantermann, Jürgen, 81477 München (DE); Wijns, Eduard, 2570 Duffel (BE)

(57) **Zusammenfassung**

Zur Erkennung eines Teledienstes beim Aufbau einer Verbindung in einem Telefonnetz (PSTN) von einer rufenden Stelle (TXA) zu einem Zielteilnehmer (TNB) wird aufgrund der Verbindungsanforderung (20) in einer Vermittlungsstelle des Netzes, vorzugsweise einer dem Zielteilnehmer zugeordneten Zielvermittlungsstelle (VSB), auf die angeforderte Verbindung vorläufig eine Signalerkennung (22) für eine Dauer aufgeschaltet, die zumindest für das Aussendens eines Dienstrufsignals, welches einen Teledienst anzeigt, durch die rufende Stelle (TXA) ausreichend ist. Wenn von der Signalerkennung ein Dienstrufsignal empfangen wurde (23), wird dieses hinsichtlich des angezeigten Dienstes ausgewertet, und die weitere Behandlung der Verbindung (24-26) erfolgt in Abhängigkeit von dem so angezeigten Dienst.

## Beschreibung

Dienstespezifische Behandlung eines Verbindungswunsches hinsichtlich des gerufenen Teilnehmeranschlusses

Die Erfindung betrifft ein Verfahren zur Behandlung eines Verbindungswunsches für einen Zielteilnehmer in einem Telefonnetz, bei welchem von einer rufenden Stelle aus an das Netz eine Verbindung zu dem Zielteilnehmer angefordert wird. Hierbei kann eine Verbindung auch für die Verwendung eines Teledienstes angefordert werden.

Auf Telefonnetzen können neben dem eigentlichen Telefondienst verschiedene Kommunikationsdienste stattfinden, die als sogenannte Teledienste auf der Grundlage der vom Telefondienst zur Verfügung gestellten Übertragungsdienste (OSI-Schichten 1 bis 3 und höhere OSI-Schichten) realisiert sind. Teledienste sind z.B. der Telefax-Dienst oder die Datenübertragung per Modem.

Oftmals ist auf einem Teilnehmeranschluss ein Endgerät für nur einen bestimmten Teledienst - z.B. ein Telefax-Gerät - angeschlossen oder auch nur ein Telefongerät, welches für keinen der Teledienste ausgelegt ist, sondern nur für den üblichen personenbezogenen Telefonverkehr. Es ist daher wünschenswert, dass ankommende Verbindungsrufe für einen bestimmten Teledienst nicht zu einem Anschluss durchgestellt werden, der diesen Teledienst nicht verwerten kann. Beispielsweise kann der Fall auftreten, dass von einem automatischen Telefaxgerät aus ein Telefax zu senden ist, jedoch irrtümlich eine falsche Rufnummer programmiert ist, die einem Telefonteilnehmer zugeordnet ist; diese Teilnehmer würde nun durch einen Anrufversuch belästigt, den er nicht bedienen kann (vielmehr wird der Fax-Signalton zumeist als sehr unangenehm empfunden), unter Umständen sogar durch eine Serie von Anrufversuchen. Dies kann in besonderen Fällen so weit führen, dass zur Vermeidung der Belästigung der gerufene Telefonteilnehmer sein Telefon sperrt und nunmehr auch für andere Anrufe nicht mehr erreichbar ist.

Auch kann der Fall eintreten, dass einer Rufnummer eine Anzahl von Endgeräten zugeordnet sind, die jeweils bestimmte Dienste bedienen können, z.B. ein Telefongerät, ein Telefaxgerät und ein Modem zur Datenübertragung (beispielsweise für e-Mail-Nachrichten). Ein ankommender Ruf für sollte dann je nach dem gewünschten Dienst dem jeweils passenden Endgerät bzw. Anschluss zugestellt werden.

Es besteht daher der Wunsch, im Hinblick auf den terminierenden - d.h. auf den Zielteilnehmer (B-Seite) ausgerichteten-Vermittlungsverkehr Informationen über die einen Dienst betreffenden Wünsche der rufenden Stelle (A-Seite) auswerten zu können. Beispielsweise kann so die Terminalauswahl auf der B-Seite gesteuert werden, z.B. für ein Dienst-spezifisches 'Line Hunting', oder eine selektive Klingelsteuerung erfolgen, bei der je nach verlangtem Dienst auf dem B-seitigen Endgerät ein spezifischer Rufton gegeben wird.

Dies setzt voraus, dass die A-seitigen Dienstwünsche der B-seitigen Zielvermittlungsstelle bekannt gegeben werden. Das kann z.B. dadurch erreicht werden, dass die mit der Zwischenamtssignalisierung übertragenen, standardisierten Dienstekennzeichen ausgewertet und berücksichtigt werden, z.B. die nach ITU-T Empfehlung Q.939 (vgl. Abschnitte 3 und 6.3) definierten Kennzeichen. Wenn die A-Seite ein ISDN-Terminal ist, sind die übertragenen standardisierten Dienstkennzeichen bereits aussagefähig genug. Im Falle einer analogen A-Seite jedoch oder eines beliebigen analogen Terminals an einem ISDN-Ta/b-Adapter, reicht die übertragene Diensteinformation nicht für diesen Zweck aus. So wird z.B. für Gruppe-3-Telefax oder Modem-Übertragungen nach ITU/ETSI die Kennzeichnung "Audio 3.1 kHz" verwendet, die dieselbe Kennzeichnung wie für analoge Sprachverbindungen ist. Daher ist aus der Dienstekennzeichnung in der Signalisierung keine zuverlässige Unterscheidung zwischen Sprach-, Telefax- und Datenverbindungen möglich.

Die Erkennung des von einer analogen A-Seite ausgehenden Teledienstes erfolgt nach den bekannten Verfahren bei einem analogen Terminal erst nach Durchstellen der Verbindung zum Terminal. Dies sei an zwei Beispielen, nämlich der Telefax-Übertragung und der Modem-Übertragung, kurz veranschaulicht.

Die bekannte Lösung für Telefax-Übertragung setzt auf die ITU-T Empfehlung T.30 (Ausgabe 07/96) "Procedures for document facsimile transmission in the general switched telephone network" auf. Da im Rahmen der hier beschriebenen Erfindung nur die Dienst-Unterscheidung vor der Nutzdaten-Übertragung von Belang ist, ist hier die Phase A ('call establishment', "Verbindungseinrichtung") maßgebend (vgl. Abschnitte 1 bis 4 der T.30). Von den für die Phase A definierten Betriebsmodi ('operating methods') werden im folgenden hauptsächlich jene Modi betrachtet, die den automatischen Betrieb auf der A-Seite beinhalten, d.s. die Betriebsweisen 3 (A-seitig automatischer, B-seitig manueller Betrieb; Punkt 3.1.3 der T.30) und 4 bzw. 4bis (A- und B-seitig automatischer Betrieb; Punkte 3.1.4 und 3.1.5 der T.30). Die aktive Identifikation als Telefax-Terminal (Gruppe 3) erfolgt gemäß der T.30 durch das Aussenden eines sogenannten CNG-Tons (CNG für 'calling tone', "Rufton"), der als 1,1 kHz-Ton von 0,5 s Dauer, der periodisch in einem Abstand von 3 s Pause wiederholt wird, definiert ist (vgl. Abschnitt 4.2 der T.30).

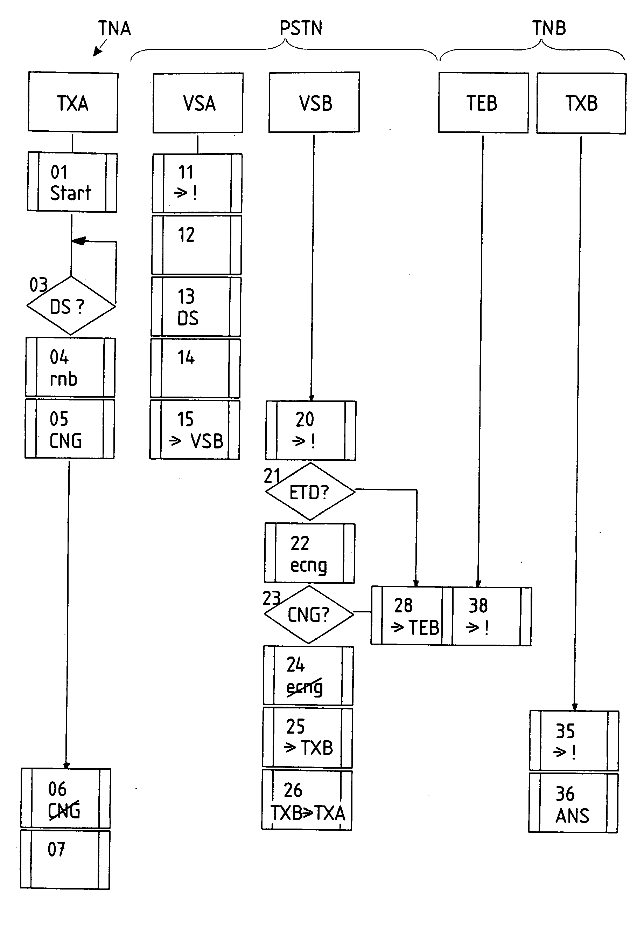

Für Datenmodems setzt die bekannte Lösung auf die ITU-T Empfehlung V.25 (Ausgabe 10/96) "Automatic answering equipment and general procedures for automatic calling equipment on the general switched telephone network"auf. Für das Einrichten der Verbindung ist insbesondere Ereignis 3.7 der Schnittstellenprozeduren an der Ruf-erzeugenden Datenstelle (Abschnitt 3 der V.25) maßgebend. Die aktive Identifikation als Modem erfolgt gemäß der V.25 durch das Aussenden eines sogenannten CT-Signals ('Calling Tone'), das als 1,3 kHz-Ton von 0,5 bis 0,7 s Dauer, der periodisch in einem Abstand von 1,5 bis 2 s Pause wiederholt wird, definiert ist (vgl. Abschnitt 3, insbesondere Figur 1, der V.25).

Das CNG-Signal ist nach der T.30 (Ausgabe 1996) für Telefaxgeräte auf der A-Seite verpflichtend; Telefaxgeräte, die diesem Standard nicht konform sind, sind schon seit langem nicht mehr auf dem Markt und auch kaum mehr im Einsatz. Gleiches gilt für Modems hinsichtlich des CT-Signals aufgrund des V.25 (Ausgabe 1996).

Gemäß den ITU-T-Normen gibt das rufende A-Terminal durch das CNG- bzw. CT-Signal unmittelbar nach Aussenden der Wahlziffern zur Herstellung der Verbindung zu dem B-Terminal zu erkennen, welcher Teledienst gewünscht ist.

Es ist daher Aufgabe der Erfindung, einen Weg zu finden, auf der B-Seite eine dienstespezifische Behandlung vermittlungsstellenintegriert durchzuführen, ohne hierzu die gebräuchliche Signalisierung erweitern zu müssen, und unabhängig vom Typus der A-Seite (z.B. analog oder IDSN).

Diese Aufgabe wird durch ein Verfahren der eingangs genannten Art gelöst, bei welchem erfindungsgemäß seitens einer Vermittlungsstelle des Netzes
a) auf die angeforderte Verbindung in der Vermittlungsstelle vorläufig eine Signalerkennung für eine Dauer aufgeschaltet wird, die zumindest für das Aussendens eines Dienstrufsignals, welches einen Teledienst anzeigt, durch die rufende Stelle ausreichend ist, und
b) im Falle dass von der Signalerkennung ein Dienstrufsignal empfangen wurde, dieses hinsichtlich des angezeigten Dienstes ausgewertet wird und die weitere Behandlung der Verbindung in Abhängigkeit von dem so angezeigten Dienst durchgeführt wird.

Diese Lösung gestattet es, über die bekannte Dienstkennzeichnung hinaus eine analoge Telefax bzw. Modem-Übertragung hinreichend sicher zu erkennen und daraus Steuerkriterien für eine dienstespezifische Behandlung seitens des Netzes abzuleiten. Durch die erfindungsgemäße Verlegung des Anfangs des Signalisierungsprozesses beim Verbindungseinrichten zur Vermittlungsstelle hin gelingt es, aus den signalisierten oder sonst übermittelten Kennzeichen Unterscheidungsmerkmale zu generieren, die eine Unterscheidung der Teledienste, insbesondere Sprach-, Telefax- und Datendienste ermöglichen. Die erfindungsgemäße Verfahren verzichtet hierbei auf eine Erweiterung der Zwischenamtssignalisierung, die mit Inkompatibilitäten verbunden wäre.

Das erfindungsgemäße Verfahren kann für den Fall, dass von der Signalerkennung kein Dienstrufsignal empfangen wurde, zweckmäßigerweise dadurch fortgeführt werden, dass anstelle Schritt b) die Verbindung als Telefonverbindung an einen Telefonanschluss des Zielteilnehmers durchgestellt wird. Diese Behandlung im Falle, dass keine Dienstrufkennung gegeben wird, ist beispielsweise dann sinnvoll, wenn unter der gerufenen Rufnummer ein Sprach-Telefonanschluss angegeben ist, zu dem dann dieser Ruf durchverbunden würde. Eine denkbare alternative Weiterbehandlung ist z.B. das Abweisen der Verbindung, insbesondere wenn unter der zugehörenden Rufnummer nur Teledienst-Terminals angeschlossen sind.

Günstigerweise kann die Erkennung und Auswertung des Dienstrufsignals seitens einer dem Zielteilnehmer zugeordneten Zielvermittlungsstelle des Netzes durchgeführt werden. In diesem Fall erfolgt die gesamte Dienst-abhängige Rufbehandlung in der Zielvermittlungsstelle - d.i. die terminierende Vermittlungsstelle, von der aus der zugehörende Teilnehmeranschluss versorgt wird - während der netzinterne Signalverkehr unverändert bleibt.

Hierbei kann es erwünscht sein, dass die erfindungsgemäße Behandlung ankommender Verbindungsrufe nur geschieht, wenn dies von dem betreffenden Zielteilnehmer zuvor gewünscht worden ist. In einem derartigen Fall ist es vorteilhaft, wenn aufgrund der Verbindungsanforderung anhand von seitens der Zielvermittlungsstelle vorgesehenen Teilnehmerdaten überprüft wird, ob für den Zielteilnehmer die Erkennung/Auswertung von Dienstrufsignalen bzw. eine Dienst-abhängige Rufbehandlung aktiviert ist, und nur im Falle dass diese aktiviert ist, das Verfahren ab Schritt a) ausgeführt wird, ansonsten die Verbindung als Telefonverbindung an einen Telefonanschluss des Zielteilnehmers durchgestellt wird.

Um eine frühzeitige Erkennung eines Teledienstes zu erreichen, ist es vorteilhaft, wenn seitens der Vermittlungsstelle (die in diesem Fall von der Zielvermittlungsstelle verschieden ist) nach der Erkennung und Auswertung des Dienstrufsignals Dienst-Information, welche den gemäß der Auswertung angezeigten Dienst bezeichnet, mit der Verbindungsanforderung an eine dem Zielteilnehmer zugeordnete Zielvermittlungsstelle in dem Netz weitergeleitet wird. Hierbei kann günstigerweise vorgesehen sein, dass seitens der Zielvermittlungsstelle aufgrund der Dienst-Information sowie anhand von seitens der Zielvermittlungsstelle vorgesehenen Teilnehmerdaten überprüft wird, ob für den Zielteilnehmer die Erkennung/Auswertung von Dienstrufsignalen bzw. eine dienst-abhängige Rufbehandlung aktiviert ist, und nur im Falle dass dies aktiviert ist, eine weitere Behandlung der Verbindung, z.B. ein Abweisen der Verbindung oder Durchstellen zu einem Netzanschluss, in Abhängigkeit von diesen Daten einschließlich der Dienst-Information durchgeführt wird, ansonsten die Verbindung als Telefonverbindung an einen Telefonanschluss des Zielteilnehmers durchgestellt wird.

Die Erfindung samt weiterer Vorzüge und günstiger Ausbildungen wird im folgenden anhand eines nicht einschränkenden Ausführungsbeispiels näher erläutert, das insbesondere die Einleitung einer Telefax-Übertragung von einem analogen Telefax-Terminal aus betrifft. Hierzu wird die beigefügte Figur herangezogen, welche ein Ablaufdiagramm der Vorgänge beim Beginn der Telefax-Übertragung nach der Erfindung zeigt.

In der Figur sind die an dem im folgenden diskutierten Ablauf beteiligten Netzstellen nebeneinander angeordnet. Diese sind im einzelnen ein analoges Telefax-Gerät TXA eines (rufenden) Teilnehmers TNA; das Telefaxgerät TXA ist über eine erste Vermittlungsstelle VSA an ein Telefonnetz PSTN angebunden. Von dem Telefaxgerät TXA aus soll in dem hier betrachteten Beispiel eine Telefax-Nachricht übertragen werden, und zwar an einen Zielteilnehmer TNB, der neben einem Telefongerät TEB für Sprachtelefonie über ein Telefax-Gerät TXB verfügt. Beide Geräte TEB,TXB sind über eine Vermittlung VSB an das Telefonnetz PSTN angebunden; diese Vermittlungsstelle VSB repräsentiert somit im betrachteten Ausführungsbeispiel die Zielvermittlungsstelle im Sinne der Erfindung. Die Verbindungs- und Anschlussmittel des Netzes PSTN einschließlich jener zwischen den Vermittlungen VSA,VSB sowie zu den Endgeräten TXA,TEB,TXB können nach bekannter Art realisiert sein und sind für die Erfindung nicht weiter von Belang.

Die einzelnen Verfahrensschritte des in der Figur gezeigten Ablaufs sind durch Bezugszeichen in Form zweistelliger Zahlen gekennzeichnet. Hierbei sind Schritte, die im wesentlichen gleichzeitig sind, nebeneinander angeordnet; aufeinanderfolgende Schritte sind untereinander von oben nach unten angeordnet, soweit nicht durch Pfeillinien ein anderer zeitlicher Ablauf angezeigt ist.

Die ersten, zwischen dem Faxgerät TXA und der zugeordneten Vermittlung VSA ablaufenden Schritte sind an sich bekannt. Nach dem Start des Telefaxgeräts TXA - Schritt 01 - gibt dieses ein "Offhook"-Signal. Die Vermittlungsstelle VSA erkennt in Schritt 11 das Offhook-Signal, startet in Schritt 12 die Ziffernaufnahme für eine vom Endgerät TXA zu erwartende Rufnummer und legt in Schritt 13 einen Wählton DS an. Nachdem-Schritt 03 - seitens des Geräts TXA der Wählton erkannt worden ist, übermittelt dieses der Vermittlungsstelle VSA in Schritt 04 und 14 die Rufnummer rnb des Zielteilnehmers TNB. Anschließend in Schritt 05, also noch bevor die Verbindung zum Endteilnehmer durchgeschaltet wird, legt das Telefaxgerät TXA in Übereinstimmung mit den ITU-T-Normen den CNG-Ton an. Die Vermittlungsstelle VSA routet im nächsten Schritt 15,20 zu der Vermittlungsstelle VSB, die der Zielteilnehmer-Rufnummer rnb zugeordnet ist.

Die Vermittlungsstelle VSB ist entsprechend den beispielsgemäßen Voraussetzungen nach der Erfindung für eine dienstespezifische Behandlung für den bei dem Zielteilnehmer TNB terminierendem Verkehr eingerichtet. Hierzu sind seitens der Vermittlung VSB Ton-Empfänger bekannter Art vorgesehen, welche bei Bedarf in eine im Aufbau befindliche Telefonverbindung zugeschaltet bzw. in diese eingeschleift werden können. In dem hier betrachteten Ausführungsform sind die Ton-Empfänger dazu eingerichtet, nach an sich bekannter Art Dienstrufsignale, in diesem Fall das CNG-Signal für eine Telefax-Übertragung, zu detektieren und den Empfang an die Steuerung der Vermittlungsstelle zu melden.

Günstigerweise kann vorgesehen sein, dass dem Teilnehmer TNB bzw. den zugehörenden Anschlüssen - hierbei kann es sich z.B. um einen analogen Einzel- oder Sammelanschluss, einen ISDN-Basisanschluss oder ISDN-Primäranschluss handeln - zugeordnet ein Attribut ETD administriert wird, dass sich auf die Erkennung der Teledienste bezieht. Dies kann beispielsweise dienstespezifisch als Merkmal "Fax Gruppe 3 Erkennung" (oder "Modem Erkennung") realisiert werden. Das Attribut wird z.B. in der semipermanenten Teilnehmerdatenbasis der Vermittlung VSB gespeichert und kann sowohl anschlussbezogen (betreffend den zugehörenden Anschlussport) als auch auf Rufnummernbezogen zugewiesen sein.

Zweckmäßigerweise wird ein derartiges Attribut nur dann aktiviert, wenn dem Betreiber des Netzes PSTN bzw. der Vermittlungsstelle VSB von dem betreffenden Teilnehmer TNB mitgeteilt wird, dass dieser eine dienst-spezifische Selektion nutzen will, wie z.B. nach Art des hier behandelten Beispiels. Der Teilnehmer kann beispielsweise das Attribut über einen Zugangscode aktivieren, wobei durch nachgewählte Ziffern die Art der dienstespezifischen Behandlung ausgewählt werden kann - z.B. Zustellung von Telefax-Anrufen zu einem anderen Anschluss TXB, Zustellung zum selben Anschluss mit einem anderen Rufzeichen, Abweisung von Telefax-Anrufen usf. Sofern gewünscht, kann der Zugangscode zusätzlich mit einem Passwort geschützt werden. Beispielsweise über einen zweiten Zugangscode kann die dienstespezifische Behandlung wieder deaktiviert werden, sodass in der Vermittlung keine Unterscheidung der Teledienste durchgeführt wird und alle Anrufe z.B. dem Telefonanschluss TEB zugeführt werden.

Seitens der Vermittlungsstelle VSB wird bei Einlangen 20 einer Verbindungsanforderung gemäß der Erfindung - Schritt 21 - vor jedem vermittlungstechnischen Verbindungsaufbau zu einem B-seitigen Endgerät überprüft, ob bei dem zugeordneten Anschluss bzw. Netzübergang ein Attribut ETD betreffend die Erkennung von Telediensten nach der Erfindung gesetzt ist.

Ist das Attribut ETD gesetzt, so wird - Schritt 22 - die Erkennung eines Dienstrufsignals gestartet, in diesem Fall die Erkennung ecng eines CNG-Signals. Hierzu wird beispielsweise vor dem Durchschalten der Verbindung zum B-seitigen Endgerät bzw. Übergang ein Ton-Empfänger in die im Aufbau befindliche Kommunikationsverbindung solange eingeschleift, bis hinreichend sicher erkannt worden ist, ob die A-Seite ein CNG-Signal (oder ein entsprechend den Einstellungen anderes Dienstrufsignal) ausgesendet hat.

Als hinreichend sicher für den Empfang eines CNG-Signals (bzw. CT-Signals) wird gewertet, wenn ein 1,1 kHz-Signal mit einer Frequenzabweichung von maximal ±38 Hz von 425 bis 575 ms Dauer (bzw. ein 1,3 kHz-Signal mit maximaler Frequenzabweichung von ±15 Hz mit 600 ms ± 100 ms Dauer), dessen Beginn innerhalb eines Detektionsfensters von 3450 ms lag, erkannt worden ist. Dies ergibt eine gesamte Erkennungsdauer von ca. 4025 ms (bzw. 4150 ms).

Nach Ablauf der Erkennungsdauer wird - Schritt 23 - überprüft, ob ein Dienstrufsignal empfangen worden ist. Ist das CNG-Signal erkannt worden, so wird - Schritt 24 - der Ton-Empfänger ausgeschleift und in der Vermittlungsstelle VSB ein vermittlungstechnisches Kennzeichen gesetzt, das bei der weiteren dienstespezifischen Bearbeitung berücksichtigt wird. Der Ruf wird dem B-seitigen Anschluss bzw. Übergang mit dem Dienstekennzeichen "Fax Gruppe 2/3" (bzw. "Modem") in Schritt 25,35 zugestellt; das betreffende Endgerät antwortet z.B. mit einem "Answer"-Signal ANS - Schritt 36 - und die Verbindung wird in Schritt 26 durchgeschaltet.

Für die Anschlüsse, bei denen das Attribut zur Erkennung eines Dienstrufsignals aktiviert ist, verzögert sich durch die eingeschaltete Dienstrufsignal-Erkennung in der terminierenden Vermittlungsstelle VSB der Verbindungsaufbau für Rufe mit dem Dienstekennzeichen "Audio 3.1 kHz" um bis zu 4,025 s. Laboruntersuchungen der Anmelderin haben freilich ergeben, dass die Verzögerung des Rufaufbaus typischerweise ca. 1,5 s beträgt. Bei nicht gesetztem Attribut kommt es zu keinen Verzögerungen.

Der weitere Verbindungsaufbau erfolgt gemäß der ITU-T-Norm T.30. Die A-Seite sendet solange weitere CNG-Signale aus, bis die B-Seite in die Phase B ('pre-message procedure') des Verbindungsaufbaus wechselt. Die weiteren CNG-Signale können beispielsweise verwendet werden, um im B-seitigen Endgerät oder gegebenenfalls in einer vorgeschalteten Endbenutzereinrichtung - z.B. einer Fax-Weiche - weitere Steuerfunktionen auszulösen. Der Übergang in die Phase B wird in Übereinstimmung mit der T.30 durch das Aussenden eines sogenannten DIS-Signals ('Digital Identification Signal') vollzogen, mit dem die B-Seite ihre Terminal-Eigenschaften bekannt gibt, woraufhin die A-Seite das Aussenden des Dienstrufsignals beendet-Schritt 06. Die weitere Verbindungsherstellung 07 und die Telefax-Übertragung insbesondere der Nutzdaten erfolgt wie in der T.30 spezifiziert.

Analog geschieht der Verbindungsaufbau im Falle einer Modem-übertragung, wobei in diesem Fall die V.25 heran zu ziehen ist. Analog zu den oben zum Telefax beschriebenen Vorgängen sendet hier die A-Seite solange weitere CT-Signale aus, bis diese von der B-Seite durch Aussenden eines sogenannten ANS-Signals quittiert werden. Auch die CT-Signale können verwendet werden, um B-seitig weitere Steuerfunktionen auszulösen.

Ist dagegen in Schritten 22, 23 das Detektionsfenster bzw. die Erkennungsdauer ohne Dienstrufsignal abgelaufen, so gilt die Verbindung als Sprachtelefon-Verbindung und wird als solche weiterbehandelt. In dem hier betrachteten Beispiel bedeutet dies, dass der Ton-Empfänger ausgeschleift und die Verbindung zu dem Telefon TEB durchgestellt wird - Schritte 28, 38.

Neben den oben geschilderten Verfahrensweisen für automatischen Betrieb auf der A-Seite kann unter Einhaltung geeigneter Vorkehrungen auch der manuelle Betrieb auf der A-Seite (entspricht Betriebsmodus 1 oder 2 bei Telefax) unterstützt werden. Hierzu muss vorausgesetzt werden, dass bei Betriebsmodus 1 (beide Seiten manuell) die A-Seite nicht auf den mündlichen Austausch mit der B-Seite wartet, bzw. bei Betriebsmodus 2 (nur B-Seite automatisch) die A-Seite nicht auf den Empfang des von der B-Seite ausgesendeten sogenannte CED-Signals ('called terminal identification answer tone') gemäß T.30 wartet; vielmehr soll die Bedienperson auf der A-Seite die Fax-Umschaltung sofort von Hand vornehmen, noch bevor sich die B-Seite meldet, z.B. durch ein "Answer"-Signal. In diesem Fall sendet das A-seitige Endgerät, im hier betrachteten Beispiel das Telefax-Gerät TXA, sofort das CNG-Signal (oder ein entsprechendes Dienstrufsignal) aus und verhält sich im Weiteren wie ein automatisches Gerät.

Die erfindungsgemäße Lösung nützt aus, dass gemäß den ITU-T Prozeduren die A- und B-Seite in ihrem Ablauf während dem Einrichten der Verbindung zunächst entkoppelt sind; insbesondere kann das Dienstrufsignal - insbesondere das CNG- bzw. CT-Signal - von der A-Seite bereits ausgesendet werden, bevor die B-Seite das Bestehen der Verbindung z.B. durch ein "Answer"-Signal quittiert hat.

Aufgrund der Erfindung kann die Terminalauswahl auf der B-Seite gesteuert werden, z.B. für ein Dienst-spezifisches 'Line Hunting' oder eine selektive Klingelsteuerung. Darüber hinaus können auch weitere terminalseitige Behandlungen vorgesehen werden. Ein Beispiel hierfür ist eine dienstspezifische Rufabweisung; hierbei kann vorgesehen sein, dass von der Zielvermittlungsstelle eine Auslösenachricht an die A-Seite gesendet wird, welche der A-Seite anzeigt, dass die gewünschte B-Seite den angeforderten Dienst nicht bedienen kann (oder will).

Die dienstespezifische Behandlung des Verbindungswunsches kann, in einer Verallgemeinerung des oben dargestellten Beispiels, auch in einer anderen Vermittlungsstelle erfolgen, z.B. aufseiten des rufenden Teilnehmers bzw. der ihm zugeordneten Vermittlungsstelle VSA sowie an einem Netzübergang oder in einem zentralen Netzknoten. Die oben für die Zielvermittlungsstelle beschriebenen Möglichkeiten der Telefax/Modem-Erkennung sind in digitalen Netzen, die nach bekannter Art Dienstekennzeichen signalisieren können, sowohl bei der A-Seite als auch an einem Netzübergang oder - beispielsweise mithilfe von Routing-Optionen - in zentralen Netzknoten des Telefonnetzes PSTN möglich. Hierbei erfolgt die Diensterkennung entsprechend dem oben Dargestellten, wobei wiederum das Einschalten einer Signalerkennung bei jedem Ruf oder nur bei hierfür markierten Anschlüssen erfolgen kann. Nach Erkennen eines Dienstrufsignals wird ein entsprechendes Dienstekennzeichen generiert und dieses im weiteren Verbindungsaufbau an die Zielstelle weitersignalisiert. Auf diese Weise gestatten die eingangs genannten Standards für digitale Netze eine dienstabhängige Unterscheidung.

Durch die Erfindung wird eine dienstespezifische Behandlung in der B-seitigen Vermittlung durchgehend für analoge und ISDN-Dienste in einem Vermittlungssnetz ermöglicht, insbesondere auch für die in analogen Netzen zusammengefassten Dienste Sprache, Telefax und Modem, und im besonderen beim zusammenwirken zwischen analogen und ISDN-Verbindungen sowie für Netzübergänge zu Datennetzen. Die Erfindung schließt somit eine Lücke in der Standardisierung, ohne jedoch inkompatible Erweiterungen vorzusehen. Damit lässt sich die Erfindung auch nachträglich in bereits bestehenden Netzen einführen.

## Patentansprüche

1. Verfahren zur Behandlung eines Verbindungswunsches für einen Zielteilnehmer (TNB) in einem Telefonnetz (PSTN), bei welchem von einer rufenden Stelle (TXA) aus an das Netz (PSTN) eine Verbindung zu dem Zielteilnehmer angefordert wird (20),
**dadurch gekennzeichnet,**
**dass** seitens einer Vermittlungsstelle (VSB) des Netzes
a) auf die angeforderte Verbindung in der Vermittlungsstelle (VSB) vorläufig eine Signalerkennung (22) für eine Dauer aufgeschaltet wird, die zumindest für das Aussendens eines Dienstrufsignals, welches einen Teledienst anzeigt, durch die rufende Stelle (TXA) ausreichend ist, und
b) im Falle dass von der Signalerkennung ein Dienstrufsignal empfangen wurde (23), dieses hinsichtlich des angezeigten Dienstes ausgewertet wird und die weitere Behandlung der Verbindung (24-26) in Abhängigkeit von dem so angezeigten Dienst durchgeführt wird.

2. Verfahren nach Anspruch 1,
**dadurch gekennzeichnet, dass** im Falle, dass von der Signalerkennung kein Dienstrufsignal empfangen wurde, anstelle Schritt b) die Verbindung als Telefonverbindung an einen Telefonanschluss (TEB) des Zielteilnehmers durchgestellt wird (28).

3. Verfahren nach Anspruch 1 oder 2,
**dadurch gekennzeichnet, dass** die Erkennung und Auswertung des Dienstrufsignals seitens einer dem Zielteilnehmer zugeordneten Zielvermittlungsstelle (VSB) des Netzes (PSTN) durchgeführt werden.

4. Verfahren nach Anspruch 3,
**dadurch gekennzeichnet, dass** aufgrund der Verbindungsanforderung anhand von seitens der Zielvermittlungsstelle vorgesehenen Teilnehmerdaten überprüft wird (21), ob für den Zielteilnehmer die Erkennung/Auswertung von Dienstrufsignalen bzw. eine Dienst-abhängige Rufbehandlung aktiviert ist, und nur im Falle dass dies aktiviert ist, das Verfahren ab Schritt a) ausgeführt wird, ansonsten die Verbindung als Telefonverbindung an einen Telefonanschluss (TEB) des Zielteilnehmers durchgestellt wird (28).
